# EUROPÄISCHE PATENTANMELDUNG

(11) **EP 3 623 719 A1**
(43) Veröffentlichungstag der Anmeldung: **18.03.2020**
(21) Anmeldenummer: 18194375.4
(22) Anmeldetag: 14.09.2018
(51) Int. Cl.: F24F 110/72, F24F 11/00, G06Q 10/06, G06Q 50/10, F24F 110/76, F24F 110/66, F24F 110/65, F24F 110/00, F24F 110/50, F24F 110/52, F24F 110/74, F24F 110/64

(54) **VERFAHREN UND VORRICHTUNG ZUR VERBESSERUNG DER LUFTQUALITÄT AN WENIGSTENS EINEM ORT, COMPUTERPROGRAMM SOWIE ELEKTRONISCH LESBARER DATENTRÄGER**

(71) Anmelder: Siemens Aktiengesellschaft, 80333 München (DE)
(72) Erfinder: Guder, Jörn, 13405 Berlin (DE); Hofmann, Annette, 80637 München (DE); Jaeger, Florian Ansgar, 10961 Berlin (DE); Kreft, Nicolas, 10707 Berlin (DE); Müller, Katrin, 10713 Berlin (DE)

(57) **Zusammenfassung**

Um eine besonders hohe Luftqualität an wenigstens einem Ort auf effiziente und effektive Weise realisieren zu können, ist ein Verfahren mit den folgenden Schritten vorgesehen: Empfangen von Umweltdaten (UDAT), welche eine zu einem ersten Zeitpunkt in sich an dem Ort (10) befindender Luft enthaltene Menge wenigstens eines Luftschadstoffes charakterisieren (Schritt RCV); und in Abhängigkeit von der Menge, dem ersten Zeitpunkt und dem wenigstens einen Ort (10): Bestimmen zumindest einer Reduktionsmenge, um die zumindest eine Emission des wenigstens einen Luftschadstoffes zu reduzieren ist, um unter Berücksichtigung eines dem wenigstens einen Luftschadstoff zugeordneten Schwellenwertes, zu vermeiden, dass zu wenigstens einem zukünftigen zweiten Zeitpunkt eine in sich an dem wenigstens einen Ort (10) befindender Luft enthaltene Menge des wenigstens eines Luftschadstoffes den Schwellenwert überschreitet (Schritt DET).

## Beschreibung

Die Erfindung betrifft ein Verfahren und eine Vorrichtung zur Verbesserung der Luftqualität an wenigstens einem Ort sowie ein Computerprogramm und einen elektronisch lesbaren Datenträger.

Die Überschreitung von Emissions- und/oder Immissionsgrenzwerten für Emissionen wie beispielsweise Luftschadstoffe, insbesondere für Stickoxide (NOₓ) und Feinstaub (PM), kann insbesondere in urbanen Räumen beziehungsweise Ballungsgebieten unerwünscht sein, da es dann in derartigen Bereichen zu einer unerwünschten Luftqualität kommen kann. Stickoxide und Feinstaub entstehen zu großen Teilen durch die Verbrennung von organischen Energieträgern, beispielsweise in Verbrennungsmotoren, Heizungsanlagen und Heizkraftwerken. Obwohl die Anforderungen an Abgase verschärft wurden und stetig verschärft werden, kommt es dennoch häufig zur Überschreitung von Emissions- und/oder Immissionsgrenzwerten. Dies kann zu Strafzahlungen für Städte und/oder Länder und zu kostenintensiven Zwangsmaßnahmen führen. Problematisch dabei ist insbesondere, dass zur Reduzierung von Immissionen Emissionen an deren Quellen reduziert werden müssen, wobei jedoch die Immissionen an von den Quellen entfernten Messstellen gemessen werden, insbesondere als Konzentrationen in auch als Umgebungsluft bezeichneter Luft. Gemessen werden die Immissionen und/oder Emissionen, das heißt in der Luft enthaltene Luftschadstoffe üblicherweise durch technische Anlagen wie beispielsweise Wetterstationen und/oder Luftschadstoffmessstationen.

Aufgabe der vorliegenden Erfindung ist es daher, ein Verfahren, eine Vorrichtung, ein Computerprogramm und einen elektronisch lesbaren Datenträger zu schaffen, sodass an wenigstens einem Ort auf der Erde eine besonders hohe Luftqualität gewährleistet werden kann.

Diese Aufgabe wird durch die Gegenstände der unabhängigen Patentansprüche gelöst. Vorteilhafte Ausgestaltungen mit zweckmäßigen Weiterbildungen der Erfindung sind in den abhängigen Ansprüchen angegeben.

Ein erster Aspekt der Erfindung betrifft ein Verfahren zur Verbesserung der Luftqualität an wenigstens einem Ort auf der Erde. Vorzugsweise wird das Verfahren durch eine Vorrichtung durchgeführt. Die Vorrichtung ist beispielsweise eine Anlage, insbesondere eine Datenverarbeitungsanlage. Die Vorrichtung ist insbesondere eine technische Vorrichtung, sodass die Anlage eine technische Anlage und die Datenverarbeitungsanlage eine technische Datenverarbeitungsanlage ist. Insbesondere kann die Vorrichtung eine auch als Rechner oder Server bezeichnete elektronische Recheneinrichtung sein. Die Vorrichtung weist beispielsweise eine elektrische oder elektronische Rechnereinheit auf, welche auch als zentrale Rechnereinheit beziehungsweise als CPU (Central Processing Unit - zentrale Rechnereinheit) bezeichnet wird.

Bei einem ersten Schritt des Verfahrens werden, insbesondere durch die beziehungsweise von der Vorrichtung, Umweltdaten empfangen, welche eine zu wenigstens einem ersten Zeitpunkt in sich an dem wenigstens einen Ort befindender Luft enthaltene Menge wenigstens eines Luftschadstoffes charakterisieren. Mit anderen Worten charakterisieren die Umweltdaten eine Menge wenigstens eines Luftschadstoffes, wobei die Menge zu wenigstens einem ersten Zeitpunkt in Luft enthalten ist, die sich, insbesondere zu dem ersten Zeitpunkt, an dem wenigstens einen Ort befindet. Die Luft wird auch als Umgebungsluft bezeichnet. Die Umweltdaten werden beispielsweise durch eine technische Einrichtung ermittelt und/oder bereitgestellt. Bei der technischen Einrichtung zum Ermitteln der Umweltdaten kann es sich beispielsweise um eine Sensorstation handeln, welche beispielsweise den Luftschadstoff beziehungsweise die Menge des Luftschadstoffes ermittelt, insbesondere misst und/oder simuliert. Die Menge ist beispielsweise eine in einem vorgebbaren Volumen und/oder in einer vorgebbaren Masse der Luft enthaltene Menge des Luftschadstoffes. Vorzugsweise handelt es sich bei dem Luftschadstoff um Stickoxide (NOₓ) und/oder um Feinstaub (PM) und/oder um wenigstens einen anderen Luftschafstoff und/oder um mehrere andere Luftschadstoffe. Der Schadstoff kann selbstverständlich alternativ oder zusätzlich wenigstens eine oder mehrere andere Luftschadstoffe umfassen beziehungsweise aufweisen.

An dieser Stelle sei angemerkt, dass im Rahmen der Erfindung und der vorliegenden Offenbarung etwaig verwendete Ordnungszahlwörter wie beispielsweise erste, erster, erstes, ersten, zweite, zweiter, zweites, zweiten, dritte, dritter, drittes, dritten etc. - falls nichts anderes angegeben ist - nicht notwendigerweise als Mengenangaben, sondern vielmehr als Adjektive beziehungsweis adjektivisch zu verstehen, um beispielsweise zwei Elemente, von denen eines mit erstes Element und das andere mit zweites Element bezeichnet ist, begrifflich eindeutig voneinander unterscheiden zu können. Dabei kann es sich bei dem ersten Element und bei dem zweiten Element um dasselbe Element handeln beziehungsweise das erste Element kann das zweite Element beziehungsweise umgekehrt sein, oder die Elemente sind zwei voneinander unterschiedliche Elemente beziehungsweise das zweite Element ist zusätzlich zu dem ersten Element vorgesehen und umgekehrt. Ist somit beispielsweise im Rahmen der vorliegenden Erfindung und Offenbarung in einem Patentanspruch, insbesondere in einem abhängigen Patentanspruch, die Rede von einem zweiten Element, so muss nicht notwendigerweise auch ein erstes Element vorgesehen sein, insbesondere auch dann nicht, wenn sich dieser Patentanspruch beispielsweise auf einen anderen, insbesondere unabhängigen, Patentanspruch bezieht, in welchem nicht die Rede von einem ersten Element ist. Insbesondere können die Ordnungszahlwörter untereinander austauschbar sein, sodass beispielsweise das zweite Element auch als erstes Element und das erste Element auch als zweites Element bezeichnet werden könnte. Beispielsweise kann dann, wenn beispielsweise ein abhängiger Patentanspruch, in welchem die Rede von einem zweiten Element ist, in einen anderen, insbesondere unabhängigen, Patentanspruch aufgenommen wird, in welchem nicht die Rede von einem ersten Element ist, das zweite Element in erstes Element umbenannt werden. Ist dann beispielsweise in einem oder mehreren Unteransprüchen die Rede von einem ersten Element, so kann dieses Element in zweites Element umbenannt werden. Die Verwendung der Ordnungszahlwörter soll lediglich bezwecken beziehungsweise zum Ausdruck bringen, dass die Elemente das gleiche Element oder jeweilige voneinander separate beziehungsweise unterschiedliche Elemente sein können.

Bei einem zweiten Schritt des Verfahrens wird, insbesondere durch die Vorrichtung, in Abhängigkeit von der Menge, in Abhängigkeit von dem ersten Zeitpunkt und in Abhängigkeit von dem wenigstens einen Ort zumindest eine Reduktionsmenge bestimmt, um die zumindest eine, insbesondere durch zumindest einen Emittenten bewirkte, Emission des wenigstens einen Luftschadstoffes zu reduzieren ist, um unter Berücksichtigung eines dem wenigstens einen Luftschadstoff zugeordneten Schwellenwerts, insbesondere voraussichtlich, zu vermeiden, dass zu wenigstens einem zeitlich auf den ersten Zeitpunkt folgenden und somit bezüglich des ersten Zeitpunkts zukünftigen zweiten Zeitpunkt eine in sich an dem wenigstens einen Ort befindender Luft enthaltene Menge des wenigstens einen Luftschadstoffes den Schwellenwert überschreitet. Mit anderen Worten, durch die Vorrichtung wird die Reduktionsmenge derart bestimmt, insbesondere berechnet beziehungsweise abgeschätzt, dass beispielsweise dann, wenn eine Emission des Luftschadstoffes um die Reduktionsmenge herabgesetzt, das heißt reduziert wird, es an dem wenigstens einen Ort in Folge der Reduzierung der Emission des wenigstens einen Luftschadstoffes, insbesondere höchstwahrscheinlich beziehungsweise mit einer gewissen Wahrscheinlichkeit, zu einer solchen Luftqualität kommt, dass der Schwellenwert zu dem zweiten Zeitpunkt nicht, insbesondere durch eine zu dem zweiten Zeitpunkt in der Luft, die sich an dem wenigstens einen Ort zu dem zweiten Zeitpunkt befindet, enthaltene Menge des wenigstens einen Luftschadstoffes, überschritten wird. Die Reduktionsmenge ist somit beispielsweise eine geschätzte Maßnahme, welche präventiv, das heißt insbesondere bevor der Schwellenwert überschritten wird, durchzuführen ist, um zu vermeiden, dass der Schwellenwert überschritten wird.

Der Reduktionsmenge beziehungsweise der Bestimmung der Reduktionsmenge liegt beispielsweise eine erste, von zumindest einem Emittenten emittierte Emissionsmenge des wenigstens einen Luftschadstoffes zugrunde, wobei beispielsweise der zumindest eine Emittent die erste Emissionsmenge zu einem dritten Zeitpunkt beziehungsweise während eines ersten Zeitintervalls emittiert. Wird beispielsweise die erste Emissionsmenge um die Reduktionsmenge reduziert, so emittiert beispielsweise der zumindest eine Emittent zu einem bezüglich des dritten Zeitpunkts zukünftigen vierten Zeitpunkt beziehungsweise während eines bezüglich des ersten Zeitintervalls zweiten Zeitintervalls eine gegenüber der ersten Emissionsmenge geringere zweite Emissionsmenge, wobei beispielsweise die mathematische Summe aus zweiter Emissionsmenge und Reduktionsmenge die erste Emissionsmenge ergibt. Der dritte Zeitpunkt liegt vorzugsweise vor dem zweiten Zeitpunkt.

Dieses Reduzieren der ersten Emissionsmenge um die Reduktionsmenge auf die zweite Emissionsmenge führt - wie beispielsweise durch die Vorrichtung ermittelt wird beziehungsweise wurde - voraussichtlich dazu, dass ein Überschreiten des Schwellenwerts durch die zu dem zweiten Zeitpunkt in der sich an dem wenigstens einen Ort befindenden Luft enthaltene Menge des wenigstens einen Luftschadstoffes unterbleibt.

Die erste Emissionsmenge ist beispielsweise in einer Speichereinrichtung der Vorrichtung gespeichert und/oder die Vorrichtung empfängt Emissionsdaten, welche zumindest die erste Emissionsmenge charakterisieren. Die Emissionsdaten werden beispielsweise von dem zumindest einen Emittenten bereitgestellt und von der Vorrichtung empfangen.

Bei einem dritten Schritt des Verfahrens werden beispielsweise, insbesondere durch die Vorrichtung, Reduktionsdaten ausgegeben und somit bereitgestellt, wobei die Reduktionsdaten die zumindest eine Reduktionsmenge charakterisieren. Beispielsweise kann der zumindest eine Emittent die ausgegebenen Reduktionsdaten empfangen. Hierdurch kann dem zumindest einen Emittent mitgeteilt werden, dass er die Emission des wenigstens einen Luftschadstoffes um die Reduktionsmenge reduzieren soll oder kann, um dadurch ein Überschreiten des Schwellenwerts zu vermeiden. Alternativ oder zusätzlich kann wenigstens eine von dem Emittenten unterschiedliche Person, Körperschaft, juristische Person, natürliche Person und/oder andere Einrichtung anhand der ausgegebenen Reduktionsdaten erkennen, wie stark beziehungsweise um welchen Betrag die erste Emission reduziert werden müsste, um die Überschreitung des Schwellenwerts vermeiden zu können.

Vorzugsweise erfolgen das Empfangen der Umweltdaten, das Bestimmen der Reduktionsmenge und das Ausgeben der Reduktionsdaten durch die zuvor genannte Vorrichtung, insbesondere durch jeweilige Module und/oder Schnittstellen der Vorrichtung. Insbesondere können die Schritte des Verfahrens durch ein Computerprogramm oder Computerprogrammprodukt durchgeführt werden, welches beispielsweise in oder auf der Vorrichtung läuft, das heißt durch die Vorrichtung, insbesondere durch deren zentrale Rechnereinheit, durchgeführt oder ausgeführt wird.

Das erfindungsgemäße Verfahren ermöglicht die Realisierung einer Plattform, über welche beispielsweise eine Einrichtung, die vermeiden möchte, dass es zu einer Überschreitung des Schwellenwerts an dem wenigstens einen Ort zu dem zweiten Zeitpunkt kommt, eine Reduzierung der Emission des wenigstens einen Luftschadstoffes, insbesondere gegen ein wenigstens eine Kompensation wie beispielsweise ein Entgelt und/oder eine andere Kompensationsform, erbeten beziehungsweise erkaufen kann. Bei der Kompensationsform kann es sich um einen oder mehrere Kredit- und/oder Guthaben- und/oder Ansehenspunkt und/oder -betrag handeln. Ferner kann es sich bei der Kompensationsform um einen Gutschein und/oder um Verbesserung in einer, insbesondere virtuellen, sozialen Rangfolge handeln. Das Entgelt kann eine Einmalzahlung oder regelmäßige Zahlungen oder Beiträge sein. Entgelte können auch in Form von Gebühren wie beispielsweise Handelsgebühren und/oder Transaktionsgebühren für das Nutzen eines bereitgestellten Dienstes und/oder einer Plattform fällig werden.

Alternativ oder zusätzlich kann beispielsweise über die Plattform eine Einrichtung wie beispielsweise der zuvor genannte, zumindest eine Emittent, insbesondere gegen ein Entgelt, anbieten, dass er seine aktuelle und beispielsweise die erste Emissionsmenge bewirkende Emission des wenigstens einen Luftschadstoffes, insbesondere um die Reduktionsmenge, reduzieren möchte beziehungsweise kann.

Sagt dem zumindest einen Emittenten beispielsweise das zuvor beschriebene und beispielsweise von der Einrichtung angebotene Entgelt zu, so nimmt der zumindest eine Emittent das Entgelt beispielsweise an und reduziert seine Emission um die Reduktionsmenge für das Entgelt, oder der zumindest eine Emittent reduziert seine Emission um einen Teil der Reduktionsmenge für einen entsprechenden Teil des Entgelts. Ist dem zumindest einen Emittenten jedoch beispielsweise das Entgelt zu gering, so fordert er ein demgegenüber höheres Entgelt oder der zumindest eine Emittent reduziert seine Emission einfach nicht, insbesondere solange, bis die Einrichtung beispielsweise das gebotene Entgelt erhöht. Im Hinblick auf die Einrichtung kann diese beispielsweise das Entgelt erhöhen, insbesondere solange, bis der zumindest eine Emittent oder irgendein Emittent, dessen Reduktion der Emission um die Reduktionsmenge dazu führt, dass zu dem zweiten Zeitpunkt ein Überschreiten des Schwellenwerts unterbleibt, annimmt. Die Plattform ist somit eine Artvertraglicher Einigung oder eine Art Börse oder Handelsbörse, an welcher Angebot und Nachfrage beispielsweise das Entgelt regeln, für das ein Emittent seine Emissionen des Luftschadstoffes um die Reduktionsmenge oder um einen Teil der Reduktionsmenge verringert. Die Nachfrage ist dabei beispielsweise der Wunsch der Einrichtung, die Emission des Luftschadstoffes zu reduzieren, um die Überschreitung des Schwellenwerts zu vermeiden, wobei das Angebot beispielsweise darin besteht, dass der zumindest eine Emittent und/oder ein anderer Emittent oder mehrere Emittenten anbieten, ihre Emissionen des Luftschadstoffes zu reduzieren. Bei der Einrichtung kann es sich um eine öffentliche oder private Einrichtung oder um eine andere Einrichtung sein, sodass es sich bei der Einrichtung um jedwede Einrichtung handeln kann.

Eine der Erfindung zugrundeliegende Erkenntnis ist, dass im Gegensatz zu Treibhausgasen Luftschadstoffe wie beispielsweise Stickoxide beziehungsweise Stickstoffoxide und Feinstaub, bislang nicht bilanziell gehandelt werden können. Es gibt bislang keine Handelsform oder Institution oder Plattform, die Immissionen beispielsweise an einer Luftschadstoffmessstation direkt mit den sie verursachenden Quellen ins Verhältnis setzt beziehungsweise die verursachenden Emissionen in ihren zeitlichen und örtlichen Auswirkungen dynamisch abbildet und bei einer Überschreitung an der Messstelle beziehungsweise bei einer drohenden Überschreitung an der Messstelle einem Emittenten Handlungsoptionen zur Reduktion anbietet. Dies kann nun durch das erfindungsgemäße Verfahren ermöglicht werden.

Immissionen verursachen Schäden und haben somit einen negativen Wert. Um diesen negativen Wert effizient handelbar zu machen und einen funktionierenden Markt zur effizienten Reduktion der Immissionen verursachenden Emissionen etablieren zu können, wird beispielsweise jeder Emittent seinem Immissionsbetroffenen quantitativ zugeordnet. Bisher werden zwar Immissionen und/oder Emissionen reguliert, jedoch unabhängig davon, ob es tatsächlich einen Immissionsbetroffenen gibt. Bei dem Immissionsbetroffenen handelt es sich beispielsweise um die zuvor genannte Einrichtung, welche beispielsweise zumindest teilweise an dem wenigstens einen Ort angeordnet ist. Emissionsminderungsmaßnahmen sind kostenintensiv, wobei Geld zum Durchführen von Emissionsminderungsmaßnahmen schlecht allokiert ist. Immissions- und/oder Emissionsgrenzwerte werden trotzdem überschritten und Einrichtungen wie beispielsweis Städte können sich nicht helfen, weil der Emittent die gesetzlichen Anforderungen erfüllt. Ein Anreiz für eine darüber hinausgehende und gegebenenfalls zeitlich begrenzte Reduzierung der Emissionen von Emittenten besteht bislang nicht.

Das erfindungsgemäße Verfahren führt nun den Immissionsbetroffenen, das heißt beispielsweise die zuvor beschriebene Einrichtung, mit einem oder mehreren Emittenten zusammen, dessen Emission beziehungsweise deren Emissionen die Einrichtung derart betrifft beziehungsweise betreffen, dass die Emission des Emittenten beziehungsweise die Emissionen der Emittenten - falls die Emission beziehungsweise die Emissionen nicht reduzierten wird beziehungsweise werden - dazu führt beziehungsweise führen, dass der Schwellenwert zu dem zweiten Zeitpunkt überschritten wird. Dies betrifft die Einrichtung beispielsweise derart, dass die Einrichtung zumindest teilweise an dem wenigstens einen Ort angeordnet ist beziehungsweise den wenigstens einen Ort umfasst beziehungsweise für den wenigstens einen Ort insbesondere im Hinblick auf den dortigen Luftschadstoff verantwortlich ist. Die Einrichtung ist somit beispielsweise der dem zumindest einen Emittenten zugeordnete Immissionsbetroffene.

Der zuvor genannte, zumindest eine Emittent ist beispielsweise ausschließlich ein solcher Emittent, dessen Emission des Luftschadstoffes den wenigstens einen Ort beziehungsweise eine dort in der Luft aufgenommene Menge des wenigstens einen Luftschadstoffes beeinflusst.

Da bislang Emissionen zwar reguliert werden, jedoch unabhängig davon, ob es einen von diesen Emissionen betroffenen Immissionsbetroffenen tatsächlich gibt, müssen Einrichtungen wie beispielsweise Städte kostenintensive und lokale Maßnahmen wie Nachrüstungen in der Abgasnachbehandlung von Dieselfahrzeugen, die Umstellung auf Elektrofahrzeuge, spezielle Reinigungen der Verkehrswege und/oder politisch schwierig durchzusetzende Fahrverbote umsetzen, um an dem wenigstens einen Ort eine hinreichend hohe Luftqualität sichern zu können. Häufig reichen diese Maßnahmen jedoch nicht aus, sodass es dennoch zu Überschreitungen des Schwellenwerts kommt. In der Folge könnten Fahrverbote ausgesprochen und/oder Strafzahlungen durch die Einrichtung geleistet werden. Alle herkömmlichen Maßnahmen erfordern einen zeitaufwendigen politischen Prozess zur Aushandlung der zur Verfügung stehenden beziehungsweise zu befördernden Maßnahmen und deren Umsetzung. Häufig sind aufwendige Pilot- und Evaluierungsstudien erforderlich. Die betroffenen Bürger warten teilweise Jahre auf eine Verbesserung. Systeme zur Vorhersage der Luftqualität zeigen zwar Überschreitungen des Schwellenwerts an und versuchen den Zeitraum der Maßnahmen festzulegen und damit die Anzahl und die Höhe der Überschreitungen zu reduzieren. Eine aktive Beeinflussung von Emittenten, deren Emissionen und eine aktive Wertermittlung, durch welche ein Wert einer Reduktion der jeweiligen Emission ermittelt wird, erfolgt nicht.

Die zuvor genannten Probleme und Nachteile können nun durch das erfindungsgemäße Verfahren vermieden werden. Eine Wertermittlung zum Ermitteln eines insbesondere entgeltlichen Werts der Reduzierung der Emissionen erfolgt beispielsweise nach Angebot und Nachfrage, das heißt ob und für welches Entgelt ein Emittent des Luftschadstoffes ein von einer Einrichtung bereitgestelltes Angebot über eine Emissionsreduzierung annimmt.

Die Umweltdaten charakterisieren beispielsweise ein Wetter beziehungsweise eine Wetterlage an dem wenigstens einen Ort, wobei es sich bei der Wetterlage beispielsweise um eine Inversionswetterlage handeln kann. Insbesondere charakterisieren die Umweltdaten beispielsweise ein aktuelles, zu dem ersten Zeitpunkt herrschendes Wetter beziehungsweise eine aktuelle, zu dem ersten Zeitpunkt herrschende Wetterlage an dem wenigstens einen Ort.

Alternativ oder zusätzlich ist es denkbar, dass die Umweltdaten ein bezüglich des ersten Zeitpunkts zukünftiges Wetter beziehungsweise eine bezüglich des ersten Zeitpunkts zukünftige Wetterlage, insbesondere Inversionswetterlage, das beziehungsweise die an dem Ort herrscht, charakterisieren, wobei die Umweltdaten insbesondere ein zu dem zweiten Zeitpunkt an dem wenigstens einen Ort herrschendes Wetter beziehungsweise eine zu dem zweiten Zeitpunkt an dem wenigstens einen Ort herrschende Wetterlage, insbesondere Inversionswetterlage, charakterisieren beziehungsweise definieren oder beschreiben können. Die Umweltdaten werden beispielsweise durch wenigstens eine technische Einrichtung oder durch mehrere technische Einrichtungen ermittelt und insbesondere bereitgestellt. Bei der technischen Einrichtung kann es sich beispielsweise um eine Wetterstation beziehungsweise um eine, insbesondere bodennahe, Messstation handeln.

Als besonders vorteilhaft hat es sich gezeigt, wenn in Abhängigkeit von der Menge, insbesondere in Abhängigkeit von der zu dem ersten Zeitpunkt in der sich an dem wenigstens einen Ort befindenden Luft enthaltenen Menge und/oder in Abhängigkeit von der zu dem zweiten Zeitpunkt in der sich an dem wenigstens einen Ort befindenden Luft enthaltenen Menge, sowie in Abhängigkeit von dem wenigstens einen Ort mindestens ein den wenigstens einen Luftschadstoff emittierender erster Emittent ermittelt wird, wobei die Reduktionsdaten auch den ersten Emittenten charakterisieren können. Der erste Emittent ist somit beispielsweise der zuvor genannte, zumindest eine Emittent beziehungsweise der erste Emittent ist ein Emittent, dessen Emission des Luftschadstoffes den wenigstens einen Ort beziehungsweise die sich dort befindende Luft beeinflussen kann, insbesondere derart, dass dann, wenn der erste Emittent seine Emission des wenigstens einen Luftschadstoffes um die Reduktionsmenge reduziert, mit einer gewissen Wahrscheinlichkeit vermieden werden kann, dass zu dem zweiten Zeitpunkt der Schwellenwert überschritten wird. Da beispielsweise die Reduktionsdaten, welche ausgegeben beziehungsweise bereitgestellt werden können, den ersten Emittenten charakterisieren, kann beispielsweise eine Anlage wie beispielsweise ein Kraftwerk erkennen, dass die Anlage der ermittelte erste Emittent ist und dass sich beispielsweise der zuvor beschriebene Wunsch der Einrichtung, die Emissionen um die Reduktionsmenge zu reduzieren, an die Anlage richtet beziehungsweise richten kann, sodass die Anlage als erster Emittent den Wunsch erfüllen kann. Die Anlage kann den Wunsch der Einrichtung derart erfüllen, dass die Anlage ihre Emissionen für das von der Einrichtung angebotene Entgelt reduziert, vorzugsweise um die Reduktionsmenge.

Insbesondere ist es denkbar, dass das Verfahren beziehungsweise die Vorrichtung (elektronische Recheneinrichtung) eine Liste ermittelt oder erstellt, welche mehrere Emittenten umfasst, deren Emissionen des wenigstens einen Luftschadstoffes den wenigstens einen Ort im Hinblick auf die Überschreitung des Schwellenwerts oder auf die Vermeidung der Überschreitung des Schwellenwerts beeinflussen beziehungsweise beeinflussen können. Dabei ist beispielsweise der erste Emittent einer der mehreren Emittenten, die sich auf beziehungsweise in der Liste befinden. Dabei ist es denkbar, dass genau einer der mehreren Emittenten seine Emission um die Reduktionsmenge reduziert, um zu vermeiden, dass der Schwellenwert zu dem zweiten Zeitpunkt überschritten wird. Ferner ist es denkbar, dass mehrere, einige, jedoch nicht alle Emittenten der Liste oder aber dass alle Emittenten der Liste ihre Emissionen jeweils um eine Teilmenge reduzieren, derart, dass die Teilmengen in Summe der Reduktionsmenge entsprechen oder größer als die Reduktionsmenge sind. Dabei ist es denkbar, dass jeder der Emittenten beispielsweise ein Entgelt beziehungsweise einen Teil des von der Einrichtung angebotenen Entgeltes erhält. Dadurch kann insgesamt vermieden werden, dass der Schwellenwert zu dem zweiten Zeitpunkt überschritten wird.

Dadurch, dass das Verfahren beziehungsweise die Vorrichtung den ersten Emittenten beziehungsweise die mehreren Emittenten ermittelt und in Form der Reduktionsdaten ausgibt beziehungsweise bereitstellt, können beispielsweise potenzielle Emittenten anhand der Reduktionsdaten und somit anhand der Liste erkennen, ob sie Bestandteil der Liste sind oder nicht. Ist ein Emittent beispielsweise der erste Emittent beziehungsweise Bestandteil der Liste, so kann dieser Emittent erkennen, dass eine Reduzierung seiner Emissionen dazu beitragen oder gänzlich bewirken kann, dass eine Überschreitung des Schwellenwerts zu dem zweiten Zeitpunkt unterbleibt. Dann kann beispielsweise dieser Emittent ein Angebot für seine Reduzierung der Emissionen bereitstellen oder ein entsprechendes Angebot, welches von einer Einrichtung bereitgestellt wurde, annehmen. Erkennt beispielsweise ein Emittent, dass er nicht Bestandteil der Liste ist beziehungsweise nicht der erste Emittent ist, so kann er zwar eine etwaige, durch ihn bewirkte Reduzierung seiner Emissionen anbieten, jedoch ist ein etwaiges Angebot einer Einrichtung nicht an ihn gerichtet, da eine Reduzierung seiner Emission die Vermeidung der Überschreitung des Schwellenwerts an dem Ort nicht beeinflusst.

Als besonders vorteilhaft hat es sich gezeigt, wenn der erste Emittent, insbesondere durch die Vorrichtung, in Abhängigkeit von seinem Standort ermittelt wird. Der Standort ist ein weiterer Ort beziehungsweise eine weitere Position auf der Erde, wobei der Standort dem wenigstens einen Ort entsprechen kann, oder der Ort und der Standort sind zwei voneinander unterschiedliche, voneinander beabstandete oder entferne Orte oder Positionen auf der Erde. Mit anderen Worten ist es bei dieser Ausführungsform vorgesehen, dass der erste Emittent unter Berücksichtigung seines Standorts ermittelt wird. Durch Berücksichtigung des Standorts kann präzise ermittelt werden, ob eine etwaige, durch den ersten Emittenten bewirkte Reduzierung seiner Emission dazu führt oder mit einer gewissen Wahrscheinlichkeit dazu führen kann, dass eine Überschreitung des Schwellenwerts zu dem zweiten Zeitpunkt unterbleibt. Bei dem ersten Emittenten kann es sich beispielsweise um einen solchen Emittenten handeln, welcher an dem wenigstens einen Ort selbst angeordnet ist. Dies kann insbesondere bei Windstille der Fall beziehungsweise relevant sein, da dann beispielsweise die Emission des ersten Emittenten nicht durch Wind von dem Standort zu einem davon unterschiedlichen Ort geweht beziehungsweise gefördert wird.

Der Standort des ersten Emittenten unterscheidet sich beispielsweise insbesondere dann von dem wenigstens einen Ort, wenn Wind geht, welcher die Emission des ersten Emittenten von dessen Standort zu dem von dem Standort unterschiedlichen, wenigstens einen Ort transportieren könnte.

Daher hat es sich als besonders vorteilhaft gezeigt, wenn der erste Emittent in Abhängigkeit von einer Windrichtung von Wind, insbesondere in Abhängigkeit von einer in Relation zu dem Standort und/oder in Relation zu dem wenigstens einen Ort verlaufenden Windrichtung von Wind, ermittelt wird. Die Emission des ersten Emittenten kann sich insbesondere dann auf die Luftqualität an dem wenigstens einen Ort auswirken, wenn der erste Emittent auf der Luv-Seite des wenigstens einen Ortes beziehungsweise der Einrichtung angeordnet ist, da dann Wind, welcher die Emission des ersten Emittenten fördern kann, von dem Standort beziehungsweise von dem ersten Emittenten in Richtung des wenigstens einen Orts beziehungsweise in Richtung der Einrichtung weht. Dies kann bei dieser Ausführungsform durch das Verfahren besonders vorteilhaft berücksichtigt werden.

Die Windrichtung ist vorzugsweise nicht oder nicht nur die aktuelle Windrichtung, sondern eine solche Windrichtung, die zu dem zweiten Zeitpunkt voraussichtlich auftreten beziehungsweise herrschen wird. Hierdurch kann die Überschreitung des Schwellenwerts mit einer besonders hohen Wahrscheinlichkeit vermieden werden. Die Windrichtung wird beispielsweise durch die Umweltdaten charakterisiert. Die Windrichtung wird beispielsweise durch eine technische Einrichtung wie beispielsweise eine Windmesseinrichtung gemessen, wobei diese technische Einrichtung zum Messen der Windrichtung Bestandteil der zuvor genannten technischen Einrichtung zum Ermitteln und Bereitstellen der Umweltdaten sein kann. Die Windmesseinrichtung stellt beispielsweise Daten bereit, welche die gemessene und dadurch erfasste Windrichtung charakterisieren, wobei diese Daten Bestandteil der Umweltdaten sein können.

Als weiterhin besonders vorteilhaft hat es sich gezeigt, wenn der erste Emittent in Abhängigkeit von wenigstens einer technischen Ausrüstung und/oder Handlung des ersten Emittenten ermittelt wird. Die technische Ausrüstung kann beispielsweise eine Ausrüstung zum Nachbehandeln einer Rohemission des ersten Emittenten sein, wobei die Rohemission beispielsweise ein Abgas des ersten Emittenten ist. Somit kann die technische Ausrüstung beispielsweise eine Abgasnachbehandlungseinrichtung zum Nachbehandeln des Abgases des ersten Emittenten sein. Die Handlung ist vorzugsweise eine Handlung oder Tätigkeit zur Vermeidung oder Reduzierung von Emissionen, insbesondere des Luftschadstoffes. Aus dem Nachbehandeln der Rohemission des ersten Emittenten resultiert beispielsweise die Emission des ersten Emittenten. Dieser Ausführungsform liegt die Idee zugrunde, Investitionen in emissionsreduzierende und/oder emissionsvermeidende Maßnahmen zu fördern und/zu belohnen, insbesondere derart, dass bei der Zusammenführung von Angebot und Nachfrage solche Emittenten berücksichtigt und belohnt werden, die in technische Ausrüstungen zur Emissionsreduzierung und/oder Emissionsvermeidung investieren und/oder bereits investiert haben. Hierbei werden beispielsweise nur solche Emittenten Bestandteil der List und somit potentielle Empfänger des angebotenen Entgelts, die in emissionsreduzierende und/oder emissionsvermeidende Maßnahmen beziehungsweise technische Ausrüstungen investiert haben.

Solche Investitionen in technische Ausrüstungen und/oder Handlungen beziehungsweise Tätigkeiten oder Verhalten für emissionsreduzierende und/oder emissionsvermeidende Maßnahmen können durch das erfindungsgemäße Verfahren zumindest teilweise kompensiert werden, da derjenige Emittent, der solche Investitionen getätigt hat, potentiell das Entgelt erhalten kann. Hierdurch wird ein Anreiz für Investitionen in technische Ausrüstungen zur Emissionsreduzierung und/oder Emissionsvermeidung geschafften, sodass eine besonders hohe Luftqualität realisiert werden kann. Alternativ oder zusätzlich können Umwege, Handlungen, Verhalten etc. zur Vermeidung des eigenen Beitrags zu Immissionen, wie beispielsweise das Herunterfahren eines Kraftwerks oder das Umgehen oder Umfahren gewisser Zonen belohnt werden.

Mit anderen Worten ist es beispielsweise vorgesehen, bei dem zuvor beschrieben Handel beziehungsweise bei einer Vergabe und/oder Weiterleitung von Angeboten über eine Reduzierung von Emissionen solche Emittenten zu berücksichtigen, welche bereits Investitionen in technische Ausrüstungen zur Vermeidung und/oder Reduzierung von Emissionen getätigt haben. Eine weitere, dieser Ausführungsform zugrundeliegende Idee ist, dass das Verfahren beziehungsweise die zuvor genannte Plattform für Emittenten eine Möglichkeit bereitgestellt, ein Entgelt für die Reduzierung ihrer Emissionen zu erhalten. Vorzugsweise sollen die Emittenten ein Entgelt für die Reduzierung von Emissionen erhalten, welche grundsätzlich beziehungsweise aus eigenem Antrieb bereit sind, Emissionen gering zu halten und daher in technische Ausrüstungen zur Vermeidung und/oder Reduzierung von Emissionen zu investieren. Dadurch werden Emittenten dazu angetrieben, in technische Ausrüstungen zur Emissionsvermeidung und/oder Emissionsreduzierung zu investieren, da sie nur dann beispielsweise an dem zuvor beschriebenen Handel beziehungsweise an der Plattform teilnehmen können. Dadurch kann eine verbesserte Luftqualität geschaffen werden.

Bei einer besonders vorteilhaften Ausführungsform der Erfindung werden, insbesondere durch die Vorrichtung, Angebotsdaten empfangen, welche zumindest ein an wenigstens einen zweiten Emittenten des wenigstens einen Luftschadstoffes gerichtetes und von zumindest einer von dem zweiten Emittenten unterschiedlichen ersten Einrichtung bereitgestelltes Angebot für das durch den wenigstens einen zweiten Emittenten zu bewirkende Reduzieren der Emission charakterisieren. Der zweite Emittent kann - wie zuvor angedeutet - der erste Emittent oder ein von dem ersten Emittenten unterschiedlicher Emittent sein. Insbesondere kann der zweite Emittent der zuvor genannte, zumindest eine Emittent sein. Die erste Einrichtung kann die zuvor genannte Einrichtung sein beziehungsweise umgekehrt, oder die erste Einrichtung ist eine von der zuvor genannten Einrichtung unterschiedliche Einrichtung.

Das von der ersten Einrichtung bereitgestellte Angebot ist somit ein Wunsch der ersten Einrichtung, die Emission zu reduzieren, um eine Überschreitung des Schwellenwerts zu vermeiden. Das Angebot kann beispielsweise an genau einen Emittenten oder an mehrere Emittenten gerichtet sein. Insbesondere kann das Angebot an irgendeinen Emittenten gerichtet sein, ohne dass die erste Einrichtung von sich aus weiß oder vorgibt oder spezifiziert, an welchen Emittenten das Angebot gerichtet ist, um zu vermeiden, dass der Schwellenwert überschritten wird. Mit anderen Worten muss die erste Einrichtung keinen speziellen Emittenten oder keine spezielle Gruppe von Emittenten spezifizieren, an die sich das Angebot richtet, sondern das Angebot ist ein grundsätzlicher und beispielsweise an alle möglichen Emittenten, die die Luftqualität an dem Ort beeinflussen können, gerichteter Wunsch der ersten Einrichtung, die Emissionen zu reduzieren.

Wie zuvor beschrieben kann dann das Verfahren beziehungsweise die Vorrichtung ermitteln, ob der zweite Emittent der erste Emittent oder einer der Emittenten der Liste ist oder sein kann. Mit anderen Worten ermittelt das Verfahren beziehungsweise die Vorrichtung, ob dann, wenn der zweite Emittent beziehungsweise zumindest einer der Emittenten der Liste seine Emissionen um die Reduktionsmenge reduziert, eine Überschreitung des Schwellenwerts zu dem zweiten Zeitpunkt an dem wenigstens einen Ort vermieden werden kann. Dann ist beispielsweise der zweite Emittent der erste Emittent, der den Wunsch der ersten Einrichtung erfüllen kann. Das Verfahren führt somit Angebot und Nachfrage zusammen. Mit anderen Worten überprüft das Verfahren beziehungsweise die Vorrichtung, ob der unspezifische oder unspezifizierte zweite Emittent der erste Emittent ist oder sein kann. Dann ist es beispielsweise möglich, dass der erste Emittent erkennt, dass er der zweite Emittent ist und dass dann, wenn der erste Emittent seine Emissionen um die Reduktionsmenge reduziert, die Überschreitung des Schwellenwerts vermieden werden kann und der erste Emittent beispielsweise das zuvor genannte Entgelt erhält. Alternativ oder zusätzlich ist es denkbar, dass ein solcher Emittent oder solche Emittenten, welcher beziehungsweise welche der zweite Emittent sein kann beziehungsweise können, insbesondere aktiv, darauf aufmerksam gemacht wird, dass er der zweite Emittent sein kann und dass seine Emissionen beziehungsweise die Reduzierung seiner Emissionen dazu beitragen kann, das Überschreiten des Schwellenwerts zu vermeiden.

Somit hat es sich als besonders vorteilhaft gezeigt, wenn der zweite Emittent als der erste Emittent verwendet wird, wobei das Angebot dem ersten Emittenten bereitgestellt wird. Hierdurch wird beispielsweise der erste Emittent darauf aufmerksam gemacht, dass dann, wenn er seine Emissionen um die Reduktionsmenge reduziert, eine Überschreitung des Schwellenwerts vermeiden und dafür ein Entgelt erhalten kann. Der erste Emittent muss dabei nicht aktiv und aus eigenem Antrieb überprüfen, ob er als zweiter Emittent in Frage kommt. Dies wird, insbesondere automatisch, durch das Verfahren beziehungsweise durch die Vorrichtung durchgeführt.

Eine weitere Ausführungsform zeichnet sich dadurch aus, dass, insbesondere durch die Vorrichtung, Anbieterdaten empfangen werden, welche wenigstens ein an wenigstens eine zweite Einrichtung gerichtetes und von zumindest einem von der zweiten Einrichtung unterschiedlichen dritten Emittenten des wenigstens einen Luftschadstoffes bereitgestelltes Angebot für das durch den dritten Emittenten zu bewirkende Reduzieren der Emission charakterisieren.

Das zuvor genannte erste Angebot der ersten Einrichtung drückt den Wunsch der ersten Einrichtung aus, Emissionen zu reduzieren, um die Überschreitung des Schwellenwerts zu vermeiden. Das zweite, von dem dritten Emittenten bereitgestellte Angebot drückt einen Wunsch oder eine Bereitschaft des dritten Emittenten aus, seine Emissionen um die Reduktionsmenge zu reduzieren. Dies kann beispielsweise dann der Fall sein, wenn der dritte Emittent bereits hinreichend Waren und/oder Dienstleistungen produziert hat und dann seine Produktion drosseln beziehungsweise einstellen kann, um seine Emissionen zu reduzieren. Der dritte Emittent, welcher der erste Emittent und/oder der zweite Emittent sein kann, kann somit ohne Produktionseinbußen hinnehmen zu müssen weiteres Geld in Form des Entgelts verdienen, wenn er seine Produktion drosselt und somit seine Emissionen reduziert. Bezüglich eines zum Erzeugen beziehungsweise Bereitstellen von elektrischem Strom ausgebildeten Kraftwerks ist unter der Produktion beispielsweise die Bereitstellung von elektrischem Strom zu verstehen. Ist somit beispielsweise der dritte Emittent ein Strom bereitstellendes Kraftwerk, so kann das Kraftwerk insbesondere dann seine Produktion und somit seine angebotene elektrische Energiemenge drosseln, wenn eine nur geringe Nachfrage nach elektrischem Strom besteht. Alternativ oder zusätzlich kann das Kraftwerk heruntergefahren werden, wenn Anbieter dezentraler Energieproduktion zugestimmt haben, zusätzlich ins Stromnetz einzuspeisen.

Die erste und/oder zweite Einrichtung kann anhand des zweiten Angebots erkennen, dass - beispielsweise ohne dass die erste und/oder zweite Einrichtung ein Angebot für die Reduzierung von Emissionen bereitgestellt hat - bereits wenigstens ein Emittent in Form des dritten Emittenten existiert, der seine Emissionen zu reduzieren bereit ist. Die Einrichtung kann dann beispielsweise das zweite Angebot annehmen. Nimmt beispielsweise kein Emittent das erste Angebot und/oder keine Einrichtung das zweite Angebot an, so muss beispielsweise ein jeweiliges, für die Emissionsreduzierung angebotene Entgelt angepasst, insbesondere erhöht oder verringert, werden, insbesondere solange, bis das jeweilige Angebot angenommen wird. Hierdurch regeln Angebot und Nachfrage das Entgelt beziehungsweise den Preis.

Die Anbieterdaten werden beispielsweise von dem dritten Emittenten bereitgestellt und von der Vorrichtung empfangen. Die Anbieterdaten werden beispielsweise der zweiten Einrichtung bereitgestellt beziehungsweise die Anbieterdaten werden ausgegeben, wenn sich die zweite Einrichtung an dem wenigstens einen Ort zumindest teilweise befindet. Das zweite Angebot ist beispielsweise hinsichtlich eines Empfängers des zweiten Angebots, das heißt hinsichtlich einer Einrichtung unspezifisch, sodass beispielsweise die zweite Einrichtung unspezifisch ist beziehungsweise nicht von dem dritten Emittenten spezifiziert ist. Das zweite Angebot des dritten Emittenten richtet sich somit an eine, insbesondere an irgendeine, Einrichtung, um die Bereitschaft des dritten Emittenten zu signalisieren, seine Emissionen reduzieren zu wollen beziehungsweise zu können.

Dabei hat es sich als besonders vorteilhaft gezeigt, wenn die Anbieterdaten der zweiten Einrichtung bereitgestellt werden, wenn der dritte Emittent dem ersten Emittenten entspricht. Das erfindungsgemäße Verfahren beziehungsweise die Vorrichtung ermittelt somit, ob eine Reduzierung der Emission des dritten Emittenten dazu führen kann, dass eine Überschreitung des Schwellenwerts zu dem zweiten Zeitpunkt an dem wenigstens einen Ort unterbleibt. Ist dies der Fall, so ist der dritte Emittent der erste Emittent, sodass beispielsweise einem Wunsch der Einrichtung, die Emissionen zu vermeiden und dadurch eine Überschreitung des Schwellenwerts zu vermeiden, entsprochen werden kann.

Ferner ist es daher beispielsweise denkbar, dass die Anbieterdaten der zweiten Einrichtung bereitgestellt werden, wenn die zweite Einrichtung die erste Einrichtung ist. Das Verfahren ermittelt somit, ob dem Wunsch der ersten Einrichtung entsprochen werden kann, wenn der dritte Emittent seine Emissionen reduziert. Dadurch werden Angebot und Nachfrage zusammengeführt, sodass eine besonders hohe beziehungsweise der Einrichtung beziehungsweise dem Immissionsbetroffenen ausreichende. Luftqualität gewährleistet werden kann. Durch das Übermitteln der Anbieterdaten an die zweite Einrichtung wird beispielsweise die zweite Einrichtung darauf aufmerksam gemacht, dass dann, wenn der dritte Emittent seine Emissionen reduziert, mit einer hohen Wahrscheinlichkeit vermieden werden kann, dass zu dem zweiten Zeitpunkt an dem wenigstens einen Ort der Schwellenwert überschritten wird. Dann kann beispielsweise die zweite Einrichtung das Angebot des dritten Emittenten, welcher der erste Emittent ist, annehmen, um sicher, frühzeitig und insgesamt kostengünstig zu vermeiden, dass zu dem zweiten Zeitpunkt der Schwellenwert überschritten wird.

Als weiterhin besonders vorteilhaft hat es sich gezeigt, wenn das jeweilige Angebot zumindest ein für das Reduzieren der Emission von der Einrichtung zu entrichtendes und/oder für das Reduzieren der Emission dem Emittenten zustehendes Entgelt umfasst. Dadurch wird für Emittenten ein besonders hoher Anreiz geschaffen, ihre Emissionen über gesetzliche Anforderungen hinaus zu reduzieren, sodass eine besonders hohe Luftqualität gewährleistet werden kann. Alternativ oder zusätzlich wird für Emittenten ein besonders hoher Anreiz geschaffen, Grenzwerte einzuhalten, die durch regulatorische Ansätze nicht eingehalten werden können. Die Erfindung kann somit eine Lösung oder ein Werkzeug bereitstellen, um zukünftige, noch strengere Grenzwerte einzuhalten.

Wie zuvor beschrieben wird das Entgelt durch Angebot und Nachfrage reguliert. Ist beispielsweise eine Anzahl an den Emittenten, die bereit sind, ihre Emissionen gegen ein Entgelt zu reduzieren, sehr groß, während eine Anzahl an Einrichtungen, die eine Emissionsreduzierung gegen ein Entgelt wünschen, gering ist, so sinkt das Entgelt beziehungsweise das Entgelt, das der jeweilige Emittent für die Emissionsreduzierung bekommt, ist gering. Ist demgegenüber jedoch die Anzahl an Emittenten, die bereit sind, ihre Emissionen zu reduzieren, gering, während demgegenüber die Anzahl an Einrichtungen, die wünschen, die Emissionen zu reduzieren, besonders groß ist, so steigt das Entgelt beziehungsweise das Entgelt ist groß, welches der jeweilige Emittent für das Reduzieren der Emissionen erhält. Hierdurch kann ein dynamischer und fairer Handel gewährleistet werden, welcher schließlich dazu führt, dass eine besonders hohe Luftqualität an dem wenigstens einen Ort herrschen kann.

Ein zweiter Aspekt der Erfindung betrifft eine Vorrichtung zur Verbesserung der Luftqualität an wenigstens einem Ort auf der Erde. Die Vorrichtung weist eine, insbesondere elektronische, Recheneinheit mit Programm-Mitteln auf, um die Schritte des erfindungsgemäßen Verfahrens gemäß dem ersten Aspekt der Erfindung auszuführen. Die Vorrichtung weist darüber hinaus eine erste Schnittstelle zum Empfangen der Umweltdaten zu dem, insbesondere in der Gegenwart liegenden, ersten Zeitpunkt auf. Die Vorrichtung weist ferner eine zweite Schnittstelle zum Empfangen von Simulationsdaten betreffend die Umweltdaten zu dem in der Zukunft liegenden zweiten Zeitpunkt auf. Außerdem weist die Vorrichtung eine dritte Schnittstelle zur Kommunikation mit dem jeweiligen Emittenten auf. Somit ist die erfindungsgemäße Vorrichtung zum Durchführen eines erfindungsgemäßen Verfahrens gemäß dem ersten Aspekt der Erfindung ausgebildet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein auch als Computerprogrammprodukt bezeichnetes Computerprogramm, welches direkt in einen Speicher einer elektronischen Recheneinrichtung ladbar ist, mit Programm-Mitteln, um die Schritte des erfindungsgemäßen Verfahrens gemäß dem ersten Aspekt der Erfindung auszuführen, wenn das Programm in der elektronischen Recheneinrichtung, insbesondere in oder durch deren Rechnereinheit, ausgeführt wird. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Das erfindungsgemäße Computerprogramm implementiert somit ein erfindungsgemäßes Verfahren auf einer, insbesondere elektronischen, Recheneinrichtung, wenn es auf der elektronischen Recheneinrichtung ausgeführt wird. Das Computerprogramm kann hierbei auch in Form eines Computerprogrammprodukts vorliegen, welches direkt in einen Speicher einer, insbesondere elektronischen, Recheneinrichtung ladbar ist, mit Programmcode-Mitteln, um ein erfindungsgemäßes Verfahren gemäß dem ersten Aspekt der Erfindung auszuführen, wenn das Computerprogrammprodukt in der elektronischen Recheneinrichtung beziehungsweise auf der elektronischen Recheneinrichtung ausgeführt wird.

Ein vierter Aspekt der Erfindung betrifft einen elektronisch lesbaren Datenträger mit darauf gespeicherten elektronisch lesbaren Steuerinformationen, welche zumindest ein Computerprogramm gemäß dem dritten Aspekt der Erfindung umfassen und derart ausgestaltet sind, dass sie bei Verwendung des Datenträgers in einer elektronischen Recheneinrichtung ein Verfahren gemäß dem ersten Aspekt der Erfindung durchführen. Vorteile und vorteilhafte Ausgestaltungen des ersten Aspekts, des zweiten Aspekts und des dritten Aspekts der Erfindung sind als Vorteile und vorteilhafte Ausgestaltungen des vierten Aspekts der Erfindung anzusehen und umgekehrt.

Das erfindungsgemäße Verfahren basiert beispielsweise auf lokalen Emissionsvorhersagen, welche beispielsweise zukünftige Emissionen beziehungsweise Immissionen und somit die zu dem zweiten Zeitpunkt in der sich an dem wenigstens einen Ort befindenden Luft enthaltene Menge des wenigstens einen Luftschadstoffes betreffen. Die Erfindung kalkuliert notwendige Emissionsreduktionen, welche mit einer gewissen Wahrscheinlichkeit dazu führen, dass der Schwellenwert an dem wenigstens einen Ort zu dem zweiten Zeitpunkt nicht überschritten wird. Das Ziel der Erfindung ist die Reduktion von Luftschadstoffen an dem wenigstens einen Ort zu einer spezifischen Zeit in Form des zweiten Zeitpunkts, um Grenzwertüberschreitungen, Strafzahlungen und/oder Einschränkungen der Bevölkerung im Hinblick auf Gesundheit und/oder Fahrverbote zu verhindern. Durch den beschriebenen Handel kommt es zu dynamischen Preisen für die Emissionsreduktion. Die Erfindung bietet dabei eine vertrauenswürdige Plattform, um Grenzwertüberschreitungen zu vermeiden und für Emissionsreduktionen Geld in Form des Entgelts zu verdienen.

Um dies zu ermöglichen, ist es beispielsweise vorgesehen, dass die Erfindung für jede Luftschadstoffmessstation und jeden Zeitpunkt ausrechnet, welcher Emittent zu welchem Zeitpunkt für welchen Anteil der Luftschadstoffkonzentration verantwortlich ist. So kann die Erfindung berechnen, welche Emissionsreduktion an einem Ort zu einem Zeitpunkt erforderlich ist, um an einem anderen Ort zu einem anderen Zeitpunkt eine Immissionsreduktion zu erreichen. Emittenten, die durch Emissionsreduktion die Immissionsreduktion bewirken können, sowie Immissionsbetroffene wie beispielsweise die zuvor genannten Einrichtungen werden frühzeitig informiert beziehungsweise gewarnt. Außerdem können die zuvor beschriebenen Angebote gemanagt beziehungsweise verwaltet und insbesondere zusammengeführt werden insbesondere dann, wenn sich das Angebot der Einrichtung nicht an einen spezifischen Emittenten und das Angebot des Emittenten nicht an eine spezifische Einrichtung richtet. Wird beispielsweise ermittelt, dass der Wunsch der Einrichtung durch den Emittenten, welcher das Angebot bereitgestellt hat, erfüllt werden kann, so werden die Angebote zusammengeführt.

Die durch die Erfindung realisierbare und eine Handelsplattform darstellende Plattform ermöglicht es zum Beispiel, einer Stadtverwaltung, die an einem Ort zu einem Zeitpunkt um einen Betrag sauberere Luft erreichen möchte, einen Luftschadstoffemittenten an einem anderen Ort ein Entgelt anzubieten, um die Emission zu einem Zeitpunkt um einen gewissen Betrag zu reduzieren. Ferner ist es denkbar, einem Emittenten ein Angebot zur Reduzierung um einen gewissen Betrag zu einem gewissen Zeitpunkt zu unterbreiten, wofür beispielsweise eine Stadt beziehungsweise eine Einrichtung ein Entgelt anbieten kann. Die Angebote können direkt oder aber anonymisiert durchgeführt, abgegeben und/oder empfangen werden. Die Angebote können auch Teilumfänge beinhalten. Kann beispielsweise der Wunsch der Einrichtung dadurch erfüllt werden, dass mehrere Emittenten ihre Emissionen jeweils um eine jeweilige Teilmenge reduzieren, sodass die Teilmengen in Summe den Wunsch der Einrichtung erfüllen können, so führt die Erfindung das Angebot mit den Emittenten zusammen. Die Emittenten werden dann darauf aufmerksam gemacht, dass sie durch die beschriebene Emissionsreduzierung das Angebot erfüllen können. Somit erhält dann beispielsweise jeder der Emittenten einen Teil des von der Einrichtung angebotenen Entgelts, insbesondere derart, dass der jeweilige Emittent einen Anteil des angebotenen Entgelts erhält, wobei der Anteil dem Anteil der jeweiligen Emissionsreduzierung des jeweiligen Emittenten dann der von der Einrichtung gewünschten Reduktionsmenge insgesamt entspricht. Führt beispielsweise einer der Emittenten eine Emissionsreduzierung durch, welche 50 % der gewünschten Reduktionsmenge entspricht, so erhält dieser eine Emittent 50 % des Entgelts. Die Erfindung ermöglicht es, dass saubere Luft beziehungsweise Emissionsreduzierungen handelbar wird beziehungsweise werden, und es entsteht ein Wettbewerb unter potenziellen Emittenten, die ihre Emissionen reduzieren können beziehungsweise wollen. Die Erfindung kann ein marktbasiertes Instrument sein, welches sicherstellt, dass Immissionsreduktionen auf die günstigste Weise erreicht werden können und wesentlich schneller umgesetzt werden können. Die Erfindung ermöglicht die Zahlungsbereitschaft für saubere Luft zu aktivieren und damit kurz- und mittelfristige Investitionen in sauberere Luft anzuregen und dient dem Schutze der Gesundheit sowie der Lebensqualität an Orten wie beispielsweise in Städten. Die Erfindung bietet die beschriebene Plattform aber auch die Immissionsvorhersage und eine Berechnung der notwendigen Emissionsreduktion an und ermöglicht eine Finanzierung dieser wissenschaftlichen Methoden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: ein Flussdiagramm zum Veranschaulichen eines erfindungsgemäßen Verfahrens zur Verbesserung der Luftqualität an wenigstens einem Ort;
- FIG 2: ein Blockdiagramm zum Veranschaulichen einer erfindungsgemäßen Vorrichtung zur Verbesserung der Luftqualität an wenigstens einem Ort, wobei die Vorrichtung zum Durchführen des Verfahrens ausgebildet ist; und
- FIG 3: ein Schaubild zur weiteren Veranschaulichung des Verfahrens.

In den Figuren sind gleiche oder funktionsgleiche Elemente mit gleichen Bezugszeichen versehen.

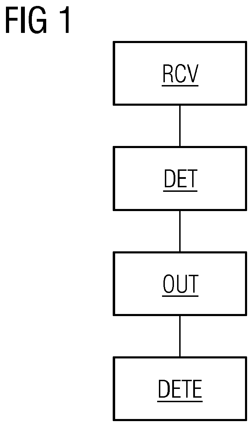

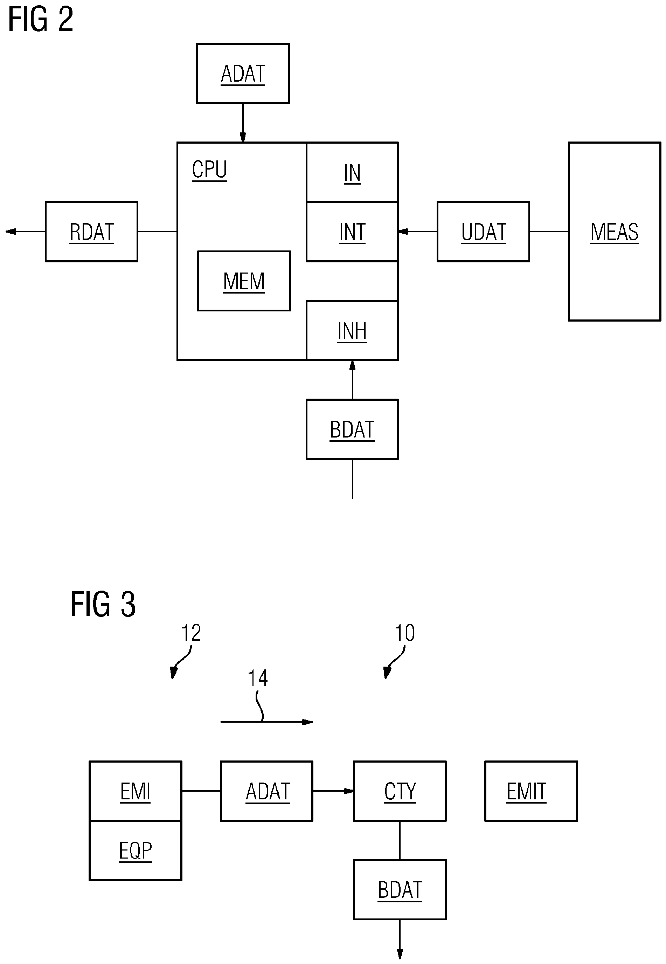

FIG 1 zeigt ein Flussdiagramm zum Veranschaulichen eines Verfahrens zur Verbesserung der Luftqualität an wenigstens einem Ort 10 (FIG 3) auf der Erde. Das Verfahren wird durch eine Vorrichtung CPU (FIG 2) durchgeführt, welche als elektronische Recheneinrichtung ausgebildet ist und eine zentrale Rechnereinheit aufweist, durch welche ein direkt in einen Speicher MEM der Vorrichtung CPU geladenes Computerprogramm ausgeführt wird. Das Computerprogramm wird auch einfach als Programm oder Computerprogrammprodukt bezeichnet und umfasst Programm-Mittel, um das Verfahren beziehungsweise dessen im Folgenden beschriebene Schritte auszuführen, wenn das Programm in beziehungsweise durch die Rechnereinheit und somit durch die Vorrichtung CPU ausgeführt wird.

Bei einem ersten Schritt RCV des Verfahrens empfängt beispielsweise die Vorrichtung CPU Umweltdaten UDAT, welche beispielsweise von wenigstens einer technischen Einrichtung MEAS bereitgestellt werden. Die Umweltdaten UDAT charakterisieren beispielsweise eine auch als erste Menge bezeichnete Menge wenigstens eines Luftschadstoffes, wobei die Menge zu wenigstens einem ersten Zeitpunkt in Luft aufgenommen oder enthalten ist, die sich zu dem ersten Zeitpunkt an dem wenigstens einen Ort 10 befindet. An dem Ort 10 befindet sich beispielsweise eine Einrichtung in Form einer Stadt CTY. Die technische Einrichtung MEAS ist beispielsweise eine an dem Ort 10 angeordnete Messstation, durch welche die Menge beziehungsweise der Luftschadstoff erfasst und gemessen wird. Die Einrichtung MEAS kann somit lokale Daten, welche die auch als erste Menge bezeichnete Menge des Luftschadstoffes charakterisieren, messen und in Form der Umweltdaten UDAT bereitstellen. Insbesondere kann die technische Einrichtung MEAS Daten von anderen, weiteren technischen Einrichtungen sammeln, welche beispielsweise an jeweiligen Messorten, welche Teile des Orts 10 sein können, eine jeweilige, in der dortigen Luft enthaltene Menge des Luftschadstoffes messen. Insbesondere kann die technische Einrichtung MEAS eine Wetterstation und/oder ein Wettersatellit sein oder umfassen, wobei die Einrichtung MEAS ein aktuelles Wetter und/oder ein zukünftiges Wetter ermittelt, das beispielsweise zu dem ersten Zeitpunkt und/oder zu einem bezüglich des ersten Zeitpunkts zukünftigen zweiten Zeitpunkt an dem Ort 10 herrscht.

Bei einem zweiten Schritt DET des Verfahrens wird durch die Vorrichtung CPU in Abhängigkeit von der ersten Menge, in Abhängigkeit von dem ersten Zeitpunkt und in Abhängigkeit von dem Ort 10 zumindest eine Reduktionsmenge bestimmt, um die zumindest eine Emission des Luftschadstoffes zu reduzieren ist, um unter Berücksichtigung eines dem Luftschadstoff zugeordneten Schwellenwerts zu vermeiden, dass zu dem zukünftigen zweiten Zeitpunkt eine in sich an dem Ort 10 befindender Luft enthaltene und auch als zweite Menge bezeichnete Menge des Luftschadstoffes den Schwellenwert überschreitet. Bei einem dritten Schritt OUT gibt die Vorrichtung CPU Reduktionsdaten RDAT aus, welche die Reduktionsmenge charakterisieren. Bei einem vierten Schritt DETE bestimmt beispielsweise die Vorrichtung CPU in Abhängigkeit von der ersten Menge und in Abhängigkeit von dem Ort 10 mindestens einen den wenigstens einen Luftschadstoff emittierenden Emittenten EMI (FIG 3). Der erste Emittent EMI wird dabei vorzugsweise in Abhängigkeit von seinem Standort 12 auf der Erde ermittelt. Es ist denkbar, dass der Standort 12 mit dem Ort 10 zusammenfällt, sodass der Standort 12 der Ort 10 ist beziehungsweise umgekehrt. Bei dem in FIG 3 veranschaulichten Ausführungsbeispiel jedoch ist der Standort 12 eine von dem Ort 10 unterschiedliche Position auf der Erde, sodass der Standort 12 und der Ort 10 voneinander beabstandet oder entfernt sind. In FIG 3 veranschaulicht ein Pfeil 14 Wind und dessen Windrichtung, wobei anhand des Pfeils 14 erkennbar ist, dass der durch den Pfeil 14 veranschaulichte Wind von dem Standort 12 in Richtung des Orts 10 weht. Dadurch können potenziell Emissionen des Emittenten EMI durch den Wind von dem Standort 12 zu dem Ort 10 transportiert werden und somit die erste Menge und/oder die auch als zweite Menge bezeichnete, zu dem zweiten Zeitpunkt in der sich an dem Ort 10 befindenden Luft enthaltene Menge des Luftschadstoffes beeinflussen, insbesondere dann, wenn der durch den Pfeil 14 veranschaulichte Wind und dessen Windrichtung zu dem ersten Zeitpunkt und/oder zu dem zweiten Zeitpunkt vorliegen. Dabei ist der Emittent EMI auf der sogenannten Luv-Seite der eine Einrichtung darstellenden Stadt CTY angeordnet. Insbesondere wird der Emittent EMI von der Vorrichtung CPU in Abhängigkeit von dem Wind und dessen Windrichtung ermittelt. Hierdurch ermittelt die Vorrichtung CPU, dass der Emittent EMI beziehungsweise dessen Emission die sich an dem Ort 10 befindende Luft und somit die dortige Luftqualität zu dem ersten Zeitpunkt und/oder zu dem zweiten Zeitpunkt beeinflussen kann.

Der Emittent EMI ist beispielsweise ein Kraftwerk, welches elektrischen Strom bereitstellt und dadurch beispielsweise Geld verdient. Das Bereitstellen des elektrischen Stroms erzeugt die genannten Emissionen des Emittenten EMI, wobei dessen Emissionen durch den Wind in die Stadt CTY getrieben werden. Die in die Stadt CTY getriebenen Emissionen des Emittenten EMI sowie die Emissionen der Stadt CTY selbst können, falls keine entsprechenden Gegenmaßnahmen getroffen werden, zu Überschreitungen des Schwellenwerts führen.

Auf der Lee-Seite der Stadt CTY ist beispielsweise wenigstens ein zweiter Emittent EMIT angeordnet, welcher ebenfalls Emissionen des Luftschadstoffes ausstößt oder emittiert. Der zweite Emittent EMIT beziehungsweise dessen Emissionen beeinflussen jedoch die Luftqualität in der Stadt CTY zumindest zu dem zweiten Zeitpunkt und/oder zu dem ersten Zeitpunkt nicht, da die Emissionen des Emittenten EMIT nicht durch den Wind in die Stadt getrieben, sondern davon weggetrieben werden. Die Vorrichtung CPU ermittelt somit beispielsweise, dass der Emittent EMIT für die Luftqualität in der Stadt CTY irrelevant ist beziehungsweise die Luftqualität nicht beeinträchtigen kann.

Der Emittent EMI kann wenigstens eine technische Ausrichtung EQP zur Emissionsreduzierung und/oder Emissionsvermeidung aufweisen, wobei beispielsweise der Emittent EMI durch die Vorrichtung CPU in Abhängigkeit von der technischen Ausrüstung EQP ermittelt wird.

Der Emittent EMI kann nun beispielsweise anbieten, seine Emissionen zu reduzieren, insbesondere um die Reduktionsmenge, wodurch beispielsweise eine Überschreitung des Schwellenwerts zu dem zweiten Zeitpunkt vermieden werden kann. Diese Emissionsreduktion des Emittenten EMI kann beispielsweise durch eine Reduktion seiner Produktion, durch einen Brennstoffwechsel, einen geänderten Betriebspunkt und/oder durch Installation von technischen Ausrüstungen EQP wie beispielsweise Abgasnachbehandlungsanlagen erfolgen. Der Emittent EMI bietet seine Emissionsreduzierung beispielsweise dadurch an, dass der Emittent EMI Anbieterdaten ADAT bereitstellt, die von der Vorrichtung CPU empfangen werden und ein Angebot für das durch den Emittenten EMI zu bewirkende Reduzieren der Emission charakterisieren. Dieses Angebot wird auch als erstes Angebot bezeichnet und ist beispielsweise spezifisch an die Stadt CTY oder unspezifisch an irgendeine Einrichtung gerichtet und drückt beispielsweise allein, nur oder grundsätzlich die Bereitschaft des Emittenten EMI aus, seine Emissionen zu reduzieren. Die Vorrichtung CPU überprüft nun beispielsweise, ob die von dem Emittenten EMI angebotene Emissionsreduzierung zumindest teilweise oder vollständig der Reduktionsmenge entspricht und somit teilweise oder vollständig dazu führen kann, dass eine Überschreitung des Schwellenwerts zu dem zweiten Zeitpunkt unterbleibt. Dies ist insbesondere dann der Fall, wenn - was durch die Vorrichtung CPU ermitteln werden kann - die Emissionen des Emittenten EMI die Luft an dem Ort 10 zumindest zu dem zweiten Zeitpunkt beeinflussen. Ermittelt beispielsweise die Vorrichtung CPU, dass die Emissionsreduzierung des Emittenten EMI dazu führen kann, dass das Überschreiten des Schwellenwerts zu dem zweiten Zeitpunkt unterbleibt, so stellt beispielsweise die Vorrichtung CPU das erste Angebot des Emittenten EMI an die Stadt CTY bereit. Hierzu stellt beispielsweise die Vorrichtung CPU aus den Anbieterdaten ADAT resultierende Daten oder die Anbieterdaten ADAT selbst bereit und übermittelt diese an die Stadt CTY.

Das erste Angebot umfasst beispielsweise ein Entgelt, für welches der Emittent EMI bereit ist, seine Emissionen zu reduzieren, insbesondere derart, dass eine Überschreitung des Schwellenwerts zu dem zweiten Zeitpunkt unterbleibt. Nimmt die Stadt CTY das erste Angebot an, so entrichtet sie beispielsweise das Entgelt an den Emittenten EMI, und der Emittent EMI reduziert seine Emissionen auf die dem Angebot entsprechende Weise. Nimmt die Stadt CTY das erste Angebot nicht an, so kann der Emittent EMI das gewünschte Entgelt anpassen, insbesondere reduzieren, insbesondere solange, bis die Stadt CTY das erste Angebot annimmt, oder eine Annahme des Angebots und somit eine Reduzierung der Emissionen des Emittenten EMI unterbleiben.

Alternativ oder zusätzlich ist es denkbar, dass die Stadt CTY Angebotsdaten BDAT bereitstellt. Die Angebotsdaten BDAT charakterisieren ein von der Stadt CTY bereitgestelltes zweites Angebot für das Reduzieren der Emission. Die Vorrichtung CPU empfängt beispielsweise die Angebotsdaten BDAT. Die Angebotsdaten BDAT drücken einen grundsätzlichen Wunsch der Stadt CTY aus, die Überschreitung des Schwellenwerts zu dem zweiten Zeitpunkt zu vermeiden und somit die Emission um die Reduktionsmenge zu reduzieren. Das zweite Angebot kann ein unspezifisches und nicht an einen speziellen Emittenten oder nicht an spezielle Emittenten gerichtetes Angebot sein. Die Vorrichtung CPU kann beispielsweise anhand der Angebotsdaten BDAT ermitteln, dass der Wunsch der Stadt CTY, deren Wunsch durch die Angebotsdaten BDAT zum Ausdruck kommt, dadurch erfüllt werden kann, dass der Emittent EMI seine Emissionen reduziert, da die Emissionen des Emittenten EMI die Luftqualität in der Stadt CTY beeinträchtigt. Dies kann die Vorrichtung CPU insbesondere auch dann ermitteln, wenn die Anbieterdaten ADAT nicht bereitgestellt beziehungsweise nicht empfangen werden. Auf Basis der Anbieterdaten ADAT kann beispielsweise die Vorrichtung CPU die Stadt CTY darauf hinweisen beziehungsweise die Stadt CTY kann anhand der Anbieterdaten ADAT erkennen, dass der Emittent EMI dazu bereit ist, seine Emissionen um die Reduktionsmenge zu reduzieren. Alternativ oder zusätzlich kann die Vorrichtung CPU den Emittenten EMI darüber informieren beziehungsweise der Emittent EMI kann anhand der Angebotsdaten BDAT erkennen, dass die Stadt CTY eine Reduzierung der Emission um die Reduktionsmenge wünscht. Hierzu stellt beispielsweise die Vorrichtung CPU zweite Daten bereit, welche aus den Angebotsdaten BDAT resultieren beziehungsweise die Angebotsdaten BDAT sind, wobei die zweiten Daten beziehungsweise die Angebotsdaten BDAT und das zweite Angebot der Stadt CTY charakterisieren. Die zweiten Daten werden beispielsweise an den Emittenten EMI übermittelt und beispielsweise von diesem empfangen.

Empfängt die Vorrichtung CPU beispielsweise sowohl die Anbieterdaten ADAT als auch die Angebotsdaten BDAT, so kann die Vorrichtung CPU insbesondere dann, wenn das jeweilige Angebot an keinen spezifischen Empfänger gerichtet ist, das Angebot des Emittenten EMI mit dem Angebot der Stadt CTY zusammenführen. Hierzu wird beispielsweise der Emittent EMI darüber informiert, dass grundsätzlich sein Angebot von der Stadt CTY angenommen werden kann beziehungsweise umgekehrt kann die Stadt CTY darauf hingewiesen werden, dass ihr Angebot durch den Emittenten EMI angenommen werden kann. Liegen die Angebote beispielsweise insbesondere hinsichtlich des jeweiligen Entgelts auseinander, so kann eine Entgeltanpassung erfolgen, insbesondere solange, bis wenigstens eines der Angebote angenommen wird. Auf diese Weise entsteht ein dynamischer Handel zwischen dem Wunsch, Emissionen zu reduzieren und dadurch die Überschreitung des Schwellenwerts zu vermeiden und der Bereitschaft, eigene Emissionen zu reduzieren. Insgesamt ist erkennbar, dass die Stadt CTY ein Nachfrager nach sauberer Luft ist. Der Nachfrager signalisiert seine Zahlungsbereitschaft durch die Angebotsdaten ADAT. Die Zahlungsbereitschaft bedeutet, dass der Nachfrager bereit ist, ein Entgelt zu zahlen, sodass beispielsweise der von der Stadt CTY unterschiedliche Emittent EMI beziehungsweise irgendein Emittent oder mehrere Emittenten seine Emissionen reduziert beziehungsweise reduzieren, sodass der Schwellenwert nicht überschritten wird.

Die Vorrichtung CPU kann berechnen, welche Emittenten ihre Emissionen um welchen Betrag reduzieren müssen, damit der Wunsch des Nachfragers erfüllt werden kann und sich somit ein Marktgleichgewicht einstellt. Jeweilige Angebote können miteinander verrechnet werden, was insbesondere dann der Fall sein kann, wenn die Nachfrage das Angebot oder umgekehrt übersteigt. Die Reduzierung der Emission kann den Emittenten EMI Geld kosten, was jedoch zumindest teilweise oder vollständig dadurch kompensiert werden kann, dass der Emittent EMI von dem Nachfrager das Entgelt für die Emissionsreduzierung erhält.

Der Emittent EMI kann das zuvor genannte Kraftwerk oder aber eine Industrie- und/oder Gewerbeanlage wie beispielsweise eine Stahlfabrik sein. Der Nachfrager kann die beschriebene Stadt CTY, ein Energieerzeuger, eine Verwaltung, ein Bürger, ein Kleingewerbe, Interessenverbände, eine Krankenversicherung und/oder ein Logistikunternehmen sein. Andere, weitere Nachfrager und Emittenten sind ohne weiteres denkbar.

Die Vorrichtung CPU weist beispielsweise eine erste Schnittstelle IN zum Empfangen der Umweltdaten UDAT auf. Ferner kann die Vorrichtung CPU eine zweite Schnittstelle INT zum Empfangen von Simulationsdaten betreffend die Umweltdaten UDAT zu dem in der Zukunft liegenden zweiten Zeitpunkt empfangen. Die Simulationsdaten resultieren beispielsweise aus den Umweltdaten UDAT und charakterisieren ein an dem Ort 10 zu dem zweiten Zeitpunkt herrschendes Wetter oder eine Wetterlage wie beispielsweise eine Inversionswetterlage. Alternativ oder zusätzlich kann die Vorrichtung CPU eine dritte Schnittstelle INH zur Kommunikation mit dem Emittenten EMI und/oder mit der Stadt CTY (Einrichtung) aufweisen. Unter der Kommunikation ist beispielsweise zu verstehen, dass die Vorrichtung CPU über die Schnittstelle INH die zuvor beschriebenen Daten bereitstellt beziehungsweise ausgibt und/oder die Vorrichtung CPU empfängt über die dritte Schnittstelle INH die Anbieterdaten ADAT und/oder die Angebotsdaten BDAT. Alternativ oder zusätzlich kann die Vorrichtung CPU jeweilige Module, insbesondere Programmmodule, zum Durchführen der jeweiligen Schritte aufweisen. Insbesondere ist es denkbar, dass die Vorrichtung CPU, insbesondere durch ein Modul, aus den Umweltdaten UDAT, insbesondere durch Simulation, eine Vorhersage über ein Wetter oder eine Wetterlage erstellt, das beziehungsweise die zumindest zu dem zweiten Zeitpunkt an dem Ort 10 herrscht beziehungsweise vorliegt. Die Vorhersage wird beispielsweise durch die Simulationsdaten charakterisiert. Die Schnittstellen IN, INT und INH können jeweilige, einzelne und somit voneinander separate Schnittstellen sein, oder die Schnittstelen IN, INT und INH sind die gleiche Schnittstelle beziehungsweise durch dieselbe beziehungsweise durch die gleiche Schnittstelle gebildet.

### Bezugszeichenliste

- 10: Ort
- 12: Standort
- 14: Pfeil
- RCV: erster Schritt
- DET: zweiter Schritt
- OUT: dritter Schritt
- DETE: vierter Schritt
- RDAT: Reduktionsdaten
- ADAT: Anbieterdaten
- CPU: Vorrichtung
- MEM: Speicher
- IN: Schnittstelle
- INT: Schnittstelle
- INH: Schnittstelle
- BDAT: Angebotsdaten
- UDAT: Umweltdaten
- MEAS: technische Einrichtung
- EMI: Emittent
- EQP: technische Ausrüstung
- CTY: Stadt
- EMIT: Emittent

## Patentansprüche

1. Verfahren zur Verbesserung der Luftqualität an wenigstens einem Ort (10), mit den Schritten:
• Empfangen von Umweltdaten (UDAT), welche eine zu wenigstens einem ersten Zeitpunkt in sich an dem wenigstens einen Ort (10) befindender Luft enthaltene Menge wenigstens eines Luftschadstoffes charakterisieren (Schritt RCV);
• in Abhängigkeit von der Menge, dem ersten Zeitpunkt und dem wenigstens einen Ort (10):
• Bestimmen zumindest einer Reduktionsmenge, um die zumindest eine Emission des wenigstens einen Luftschadstoffes zu reduzieren ist,
• unter Berücksichtigung eines dem wenigstens einen Luftschadstoff zugeordneten Schwellenwertes,
• um zu vermeiden, dass zu wenigstens einem zukünftigen zweiten Zeitpunkt eine in sich an dem wenigstens einen Ort (10) befindender Luft enthaltene Menge des wenigstens eines Luftschadstoffes den Schwellenwert überschreitet (Schritt DET); und
• Ausgeben von die zumindest eine Reduktionsmenge charakterisierenden Reduktiondaten (Schritt OUT).

2. Verfahren nach Anspruch 1,
wobei zumindest in Abhängigkeit von der Menge und dem wenigstens einen Ort (10) mindestens ein den wenigstens einen Luftschadstoff emittierender erster Emittent (EMI) ermittelt wird (Schritt DETE).

3. Verfahren nach Anspruch 2,
wobei der erste Emittent (EMI) in Abhängigkeit von seinem Standort (12) ermittelt wird.

4. Verfahren nach Anspruch 2 oder 3,
wobei der erste Emittent (EMI) in Abhängigkeit von einer Windrichtung (14), insbesondere in Abhängigkeit von einer in Relation zu dem Standort (12) und/oder in Relation zu dem wenigstens einen Ort (10) verlaufenden Windrichtung (14), ermittelt wird.

5. Verfahren nach einem der Ansprüche 2 bis 4,
wobei der erste Emittent (EMI) in Abhängigkeit von wenigstens einer technischen Ausrüstung (EQP) des ersten Emittenten (EMI) ermittelt wird.

6. Verfahren nach einem der vorhergehenden Ansprüche,
wobei Angebotsdaten (BDAT) empfangen werden, welche zumindest ein an wenigstens einen zweiten Emittenten (EMI) des wenigstens einen Luftschadstoffes gerichtetes und von zumindest einer von dem zweiten Emittenten (EMI) unterschiedlichen ersten Einrichtung (CTY) bereitgestelltes Angebot für das durch den wenigstens einen zweiten Emittenten (EMI) zu bewirkende Reduzieren der Emission charakterisieren.

7. Verfahren nach Anspruch 6 in dessen Rückbezug auf einen der Ansprüche 2 bis 5,
wobei der zweite Emittent (EMI) als der erste Emittent (EMI) verwendet wird, wobei das Angebot dem ersten Emittenten (EMI) bereitgestellt wird.

8. Verfahren nach einem der vorhergehenden Ansprüche,
wobei Anbieterdaten (ADAT) empfangen werden, welche wenigstens ein an wenigstens eine zweite Einrichtung (CTY) gerichtetes und von zumindest einem von der zweiten Einrichtung (CTY) unterschiedlichen dritten Emittenten (EMI) des wenigstens einen Luftschadstoffes bereitgestelltes Angebot für das durch den dritten Emittenten (EMI) zu bewirkende Reduzieren der Emission charakterisieren.

9. Verfahren nach den Ansprüchen 7 und 8 oder nach Anspruch 8 in dessen Rückbezug auf einen der Ansprüche 2 bis 5 oder nach Anspruch 8 in dessen Rückbezug über Anspruch 6 auf einen der Ansprüche 2 bis 5,
wobei die Anbieterdaten (ADAT) der zweiten Einrichtung (CTY) bereitgestellt werden, wenn der dritte Emittent (EMI) dem ersten Emittenten (EMI) entspricht.

10. Verfahren nach einem der Ansprüche 6 bis 9,
wobei das Angebot zumindest ein für das Reduzieren von der Einrichtung (CTY) zu entrichtendes und/oder für das Reduzieren dem Emittenten (EMI) zustehendes Entgelt umfasst.

11. Vorrichtung (CPU) zur Verbesserung der Luftqualität an wenigstens einem Ort (10), aufweisend
• eine Recheneinheit (CPU) mit Programm-Mitteln, um die Schritte des Verfahrens nach einem der Ansprüche 1 bis 10 auszuführen,
• eine erste Schnittstelle (IN) zum Empfangen der Umweltdaten (UDAT) zu dem ersten Zeitpunkt,
• eine zweite Schnittstelle (INT) zum Empfangen von Simulationsdaten betreffend die Umweltdaten (ZDAT) zu dem in der Zukunft liegenden zweiten Zeitpunkt; und
• eine dritte Schnittstelle (INH) zur Kommunikation mit Emittenten (EMI).

12. Computerprogramm, welches direkt in einen Speicher (MEM) einer elektronischen Recheneinrichtung (CPU) ladbar ist, mit Programm-Mitteln, um die Schritte des Verfahrens nach einem der Ansprüche 1 bis 10 auszuführen, wenn das Programm in der elektronischen Recheneinrichtung (CPU) ausgeführt wird.

13. Elektronisch lesbarer Datenträger mit darauf gespeicherten elektronisch lesbaren Steuerinformationen, welche zumindest ein Computerprogramm nach Anspruch 12 umfassen und derart ausgestaltet sind, dass sie bei Verwendung des Datenträgers in einer elektronischen Recheneinrichtung (CPU) ein Verfahren nach einem der Ansprüche 1 bis 10 durchführen.
